# EUROPEAN PATENT SPECIFICATION

(11) **EP 0 594 908 B1**
(45) Date of publication and mention of the grant of the patent: **08.05.2002**
(21) Application number: 92309854.5
(22) Date of filing: 28.10.1992
(51) Int. Cl.: H02J 7/00, G05F 1/59

(54) **Multiple-voltage control circuit of battery or multiple independent DC power**
Mehrfachspannungsregelschaltung von Batterien oder mehrfach unabhängigen Gleichstromquellen
Circuit multi-tension de commande de batteries ou sources d'alimentations continues indépendantes

(43) Date of publication of application: 04.05.1994
(73) Proprietor: Yang, Tai-Her, Taipei (TW)
(72) Inventor: Yang, Tai-Her, Taipei (TW)
(74) Representative: Wright, Howard Hugh Burnby

(56) References cited:
- EP-A- 0 487 204
- DE-A- 4 014 302
- FR-A- 2 397 737
- FR-A- 2 552 592
- US-A- 5 121 046

## Description

This invention relates to a power supply unit.

Since batteries are portable and mobile, they are widely used for a variety of appliances, such as electric vehicles, etc. However, most batteries, whether powered by fuel, thermal energy or solar energy, are physically limited to a single basic voltage. Generally speaking one can make a battery's voltage and capacity selectable only by employing multiple series-connected batteries, and supplying the output in accordance with the needs of the load by means of stepped voltage, by controlling the output using serial linear members, or by operating the power supply using switches.

US-A-4 175 249, FR-A-2 397 737 GB 2015834 and EP-A-0 250 718 describe known power supply units.

The present invention is a power supply unit with controlled output voltage comprising a plurality of substantially identical independent DC power supplies which are interconnected by a central control unit in a series or parallel arrangement for providing a required output voltage between positive and ground output terminals in a wide range of output voltages, and wherein each independent DC power supply has positive and negative terminals, the power supply unit further comprising a plurality of switching means which are electro-mechanical and/or solid state switches, each of the switching means being connected between the negative terminal of one of the independent DC power supplies and the positive terminal of a respective succeeding independent DC power supply, such that each of the switching means can be turned on and off by the central control unit to provide a series and/or parallel connection between the independent DC power supplies, and the power supply unit further comprises a plurality of pairs of diodes each pair of diodes being associated with a respective switching means, wherein each pair of diodes has first and second diodes, and wherein each of the diodes has anode and cathode terminals, wherein the first diode of each pair is connected by its cathode terminal to both the respective switching means, and the negative terminal of one of the independent DC power supplies, and the second diode of that pair is connected by its anode terminal to both the switching means, and the positive terminal of a respective succeeding independent DC power supply, wherein the anode terminals of all the first diodes are commonly connected to ground, and wherein the cathode terminals of all the second diodes are commonly connected to the positive output terminal, and in that the power supply unit further includes means controlling at least one of the switching means, for controlling a magnitude and a shape of the required output voltage waveform, said means controlling the switch means via the central control unit in that, said means for controlling the magnitude and the shape of the required output voltage waveform includes a solid state switch connected between ground and the ground output terminal for selectively connecting and disconnecting the power supplies to the output of the unit and operates to switch off the circuit before the switch means, are switched by the central control unit and back on shortly thereafter whereby non-sparking switching is achieved.

The invention will now be described in greater detail, by way of example, with reference to the drawings, in which:-
Fig. 1 shows an embodiment of a preferred compound voltage supply formed by two pole, two-throw switches parallel-connected with diodes;
Fig. 2 shows a linearly adjusted compound voltage waveform;
Fig. 3 shows a pulse modulated compound voltage waveform;
Fig. 4 is a schematic diagram of a second preferred compound voltage supply formed by two-pole, two-throw switches;
Fig. 5 is a schematic diagram of a third preferred compound voltage supply formed by single-pole switches and diodes;
Fig. 6 is a schematic diagram of a fourth preferred compound voltage supply formed by solid state switches and diodes;
Fig. 7 shows a linearly adjusted compound voltage waveform;
Fig. 8 shows a of pulse modulated compound voltage waveform;
Fig. 9 is a schematic diagram of a fifth preferred compound voltage supply formed by a branched switch circuit and diodes;
Fig 10 shows a low voltage embodiment of the switch circuit of Fig. 9;
Fig 11 shows an intermediate voltage embodiment of the switch circuit of Fig. 9;
Fig. 12 shows a high voltage embodiment of the switch circuit of Fig. 9;
Fig. 13 shows a sixth preferred compound voltage supply formed by single-throw switches combined with diodes;
Fig. 14 shows a seventh peferred compound voltage supply formed by solid state switch members;
Fig. 15 shows an eighth preferred compound voltage supply including an on-off switch and an output switch;
Fig. 16 shows a modification of the embodiment of Fig. 15;
Fig. 17 shows a linearly adjusted compound voltage waveform for the circuit by Fig. 15;
Fig. 18 shows a pulse modulated compound voltage waveform for the circuit of Fig. 15;
Fig. 19 shows a ninth preferred compound voltage supply;
Fig. 20 shows a modified form of the embodiment of Fig. 19;
Fig. 21 shows a tenth preferred compound voltage supply;
Fig. 22 shows an eleventh preferred compound voltage supply;
Fig. 23 shows a twelfth preferred compound voltage supply;
Fig. 24 is a block diagram showing a bridge-type alternating circuit for a controllable compound voltage DC/AC transforming circuit;
Fig. 25 is a block diagram showing a bridge-type alternating circuit for a controllable compound voltage DC/AC transforming circuit with an intermediate tap;
Fig. 26 is a diagram of the output voltage of the circuit of Fig. 25;
Fig. 27 is a block diagram showing an AC to AC compound voltage control circuit having a two-phase on-off switch circuit and an additional output storage member; and
Fig. 28 is a block diagram showing a compound voltage supply which includes an auxiliary power unit;

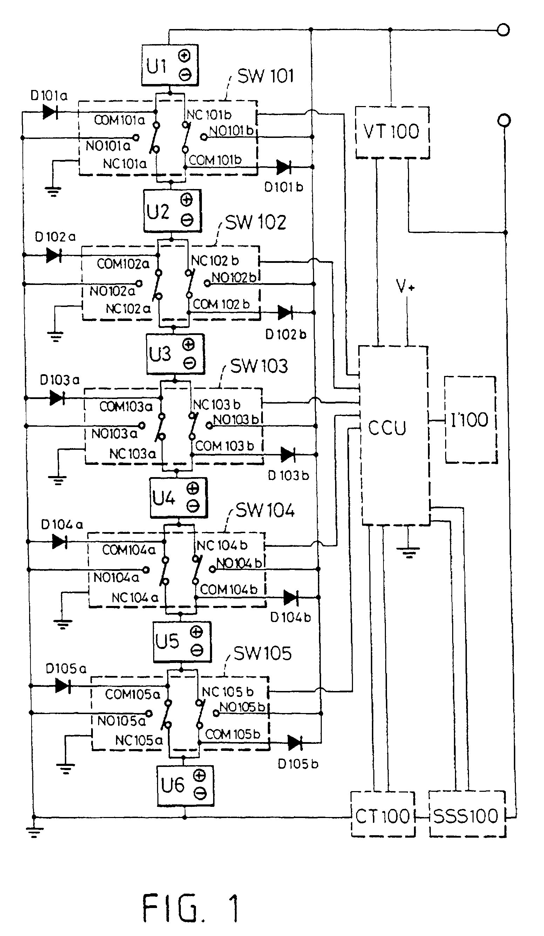

Referring to the drawings, Fig 1 shows a preferred embodiment of a stepped compound voltage power supply having batteries U1 to U6, each of which is made up of two or more sets of battery units of identical voltage and capacity, or at least of identical voltage, including both linear and quadratic storage batteries, solar batteries, fuel powered batteries, or thermal batteries. The batteries U1 to U6 are connected by means of a plurality of manual two-pole, two-throw switches SW101 to SW105, by drum switches or by other electro-mechanical switch members, such as magnetic or mechanically-operated relays, etc, which are disposed between the batteries and in direct series connection therewith. The common contacts of the two sets of poles of each two-pole switch are in replacement series with the open contacts, such that the common contact of pole a is connected to the closed contact of pole b, and the common contact of pole b is connected to its closed contact of pole a: and each connected pair of contacts is respectively connected between the positive and negative terminals of adjacent batteries with each output side common switch contact being connected to the positive terminal of the voltage supply via a diode D101b to D105b. The input side common contact of each switch is connected to the negative terminal of the voltage supply via a diode D101a to D105a.

The circuit shown in Fig. 1 also includes a current detector CT100, a voltage detector VT100, a linear or switch-mode solid state switch SSS100, and a central control unit CCU which can accept operation orders from an input device I100.

The operation of this circuit is as follows: -
1. By using a common divider symmetrically connected to an on/off switch, and wholly-open or wholly-closed contacts, the circuit can provide multiple choices for a compound voltage output.
2. When output, all multiple contacts of the diodes are closed, so that they can eliminate forward bias voltage drops and thermal losses therein.
3. When turned on/off, the diodes provide a linear stepped voltage for reducing the switch voltage, and are used as a transient current path to prolong the life of the switch contacts.
4. The power supply on-off switch or the solid state switch member can be further selected to be a two-phase conductive member or an inverse-phase device, so as to provide for control over the input voltage and current, or when the power supply is inversely input from the output end, and for control over the solid state switch member (if there is one) in order to fit the situation of external input power.

More specifically, the embodiment shown in Fig. 1 is made up of the switches SW101-SW105 connected between the six batteries U1 to U6, and each having a voltage EB. Each switch SW101 to SW105 has a diode D101a to D105a connected to it according to the principle that its input end multiples to pass a negative output; and each diode D101b to D105b multiples to pass a positive output. When the common contacts COM101a to CM105b are connected to the closed contacts NC101a to NC105b, all the batteries U1 to U6 are connected in series with an output voltage of 6 x EB. When the switches SW102 and SW104 are controlled such that their respective common contacts COM102a, COM102b, COM104a COM104b are connected to their open contacts NO102a, NO102b, NO104a and NO104b, the output voltage will be 2 x EB because the batteries U1 and U2, U3 and U4, and U5 and U6 are respectively series-connected to each other to form three parallel-connected units. When the switches SW101 to SW105 are controlled such that their common contacts COM101a to COM105b are all connected to their open contacts NO101a to NO105b, the output voltage will be EB because the batteries U1 to U6 are in parallel. If the number of batteries is increased to 24, one can obtain compound voltage levels of 1 x EB, 2 x EB, 3 x EB, 4 x EB, 6 x EB, 8 x EB, 12 x EB and 24 x EB. If the number of batteries is increased to 36, one can obtain voltage levels of 1 x EB, 2 x EB, 3 x EB, 4 x EB, 6 x EB, 9 x EB, 12 x EB, 18 x EB and 36 x EB and so forth. The switches can be under manual control, or they can be controlled by the central control unit CCU and the input device I100 so as to control the switches to turn the compound voltage on/off, or to further linearly adjust or switch open the solid state switch SSS100 at the output terminal so as to adjust and control the operation of the electro-mechanical switches and the solid state switch relative to the input value.

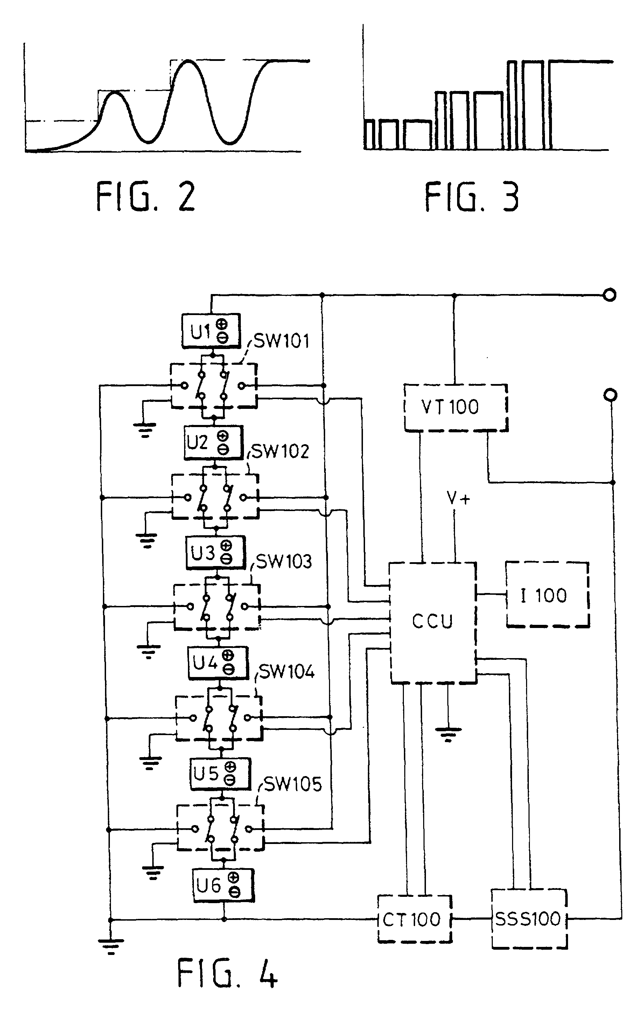

The stepped voltage output can be directly trimmed, either by means of the linear solid state switch SSS100, or by controlling one of the electro-mechanical switches SW101 to SW105, making the output higher than the needed output value, and then using the central control unit CCU to control the driven current of the linear solid state switch so as to obtain the adjustment of the linear output voltage. As is apparent from Fig 2, if we want to trim the adjustment of a voltage larger than that of a single battery, we can do it by means of an electro-mechanical switch, and its thermal loss will be reduced.

The stepped voltage output can also be trimmed directly by means of the solid state switch, or by means of controlling one of the electro-mechanical switches, making the output higher than the needed output value, and then using the central control unit CCU to control the driven pulse range of the solid state switch so as to obtain adjustment of the average output voltage. As is apparent from Fig 3, if we want to trim the adjustment of a voltage larger than a battery unit's voltage level, we can do it by means of an electro-mechanical switch. Because it has an intrinsic stepped voltage, the ripple-wave value is lower than that provided by direct adjustment of the voltage.

In the embodiment, the output current circuit is connected in series with the detector CT100 so as to measure its output current value, and provide feedback to the central control unit CCU, according to an input unit instruction or a pre-set value in the CCU, to control mutually and relatively the electro-mechanical switches and the solid state switch SSS100. The output terminal may be connected to the voltage detector VT100, so as to measure its output voltage value, and also provide feedback to the CCU, to control the output voltage in accordance with instructions from the input device 1100, by mutual control of the solid state swich and the electro-mechanical switches, or by a pre-set value in the CCU. As a result, the compound voltage supply can adjust to a load-side voltage change caused by unsteady power voltage, for example voltage drops in a battery due to drops arising from a reduction in residual storage power, or when voltage is unsteady in a solar battery because of varying amounts of sunlight, in a manner similar to a non-compound voltage supply.

It will be apparent that the above-described set operation order for the electro-magnetic and solid state switches may include electro-magnetic, mechanical and flow control modes, and that the operation may be set or delayed by a mechnical command input, or by an appropriate circuit. Also, in a variation of this embodiment, which is satisfactory when the power capacity can be lower, the diodes can be omitted, and the two-pole , two-throw switches can be directly turned on and off as shown in Fig. 4.

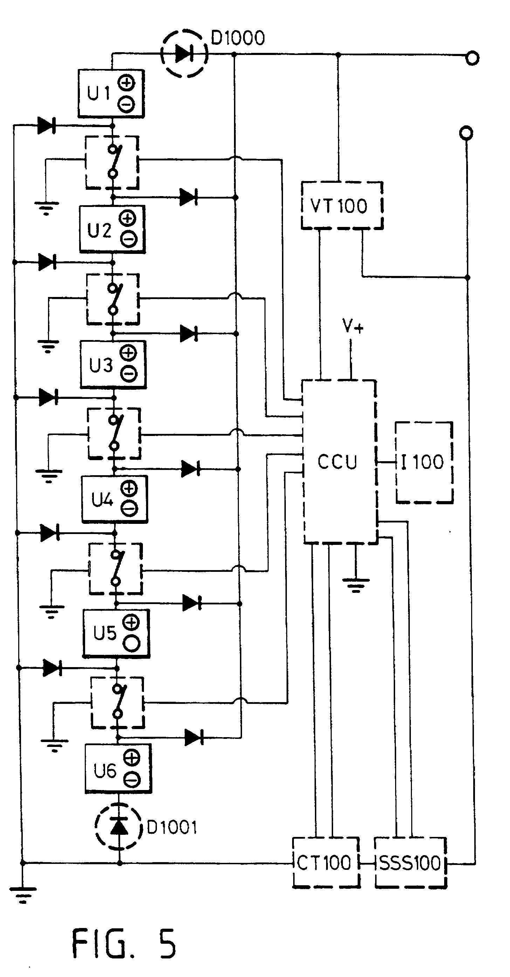

If circuit efficiency is not critical, and the application is limited by space, we can connect single-pole, single-throw switches to the diodes so as to obtain an on/off switching compound voltage output function, and in practice we can further connect a solid state switch member, an output voltage current measuring member, an input unit, and a controller CCU to produce the same functions shown in Fig 5. In this embodiment diodes D1000 and D1001 are used for stabilising the average output voltage, and can be diposed in the circuit as needed.

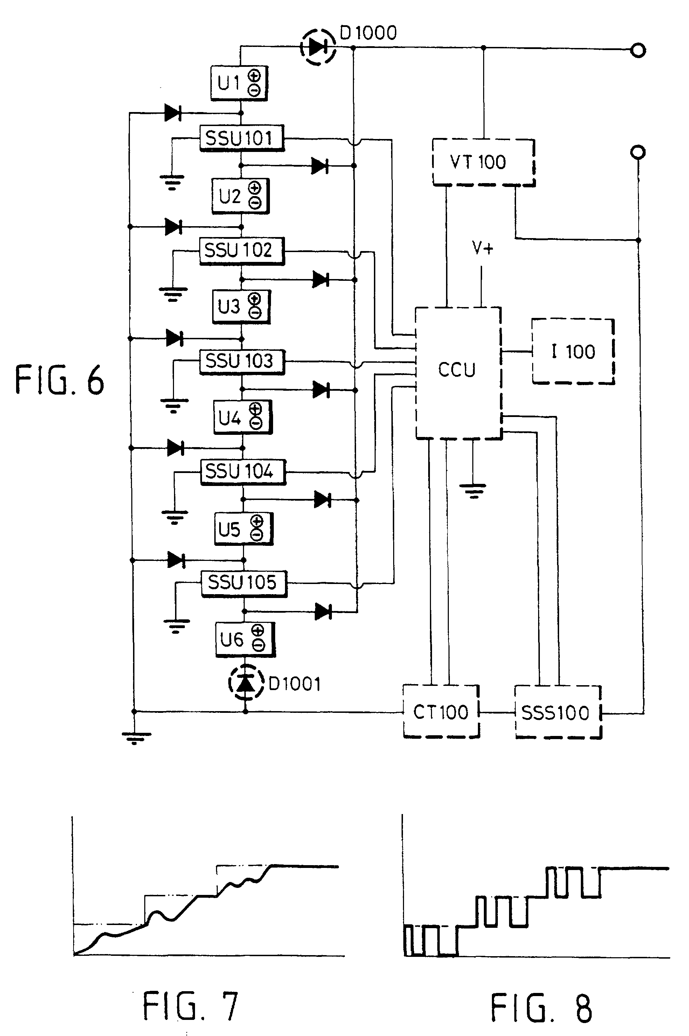

In a further variation, the electro-mechanical switches connected in series between the batteries in the circuit can be replaced by solid state switches, and connected to diodes so as to form a compound voltage output, as shown in Fig 6. This circuit otherwise has the same switching function as that of Fig 5. In the circuit of Figure 6, D1000 and D1001 are again diodes for smoothing the output voltage, and can be disposed in the circuit when needed. In this circuit, we can further dispose electro-mechanical switch contacts on both sides of the solid state switches to form units SSU101 to SSU105 so as to reduce voltage drops, losses and heat by using the following operation order:

At the "on" position, operation of the individual solid state switches is in the units SSU101 to SSU105 occurs before operation of the corresponding electro-mechanical switch. At the "off" position, operation of the individual solid state switches occurs after operation of the corresponding electro-mechanical switch.

When a solid state switch SSS100 is used as the linear control or PWM switch control, an electro-mechanical switch which is in series therewith will not operate. The solid state switch and the electro-mechanical switches can be controlled by the CCU, or can be manually, electromagnetically, mechanically, or fluid-dynamically controlled. By controlling the electro-mechanical switches, the output can surpass the needed output value, at which time the CCU controls driving current of each linear solid state switch; or, by controlling the battery which has a higher voltage between mutually serial or parallel connected batteries, the basic voltage of the batteries may be used to attain linear output voltage adjustment. Referring to Fig.7, if a large adjustment in voltage is needed, the electro-mechanical switches can be used to achieve a lower heat loss.

By operating the electro-mechanical switches, the output can surpass the needed output value, whereupon the CCU causes each solid state switch to output a pulsed current, or controls the driving current of each linear solid state switch, or exercises control over the battery which has the higher voltage level between mutually serial and paralell connected batteries so as to attain average output voltage adjustment. For example, when the CCU causes the switch units SSU101, SSU102, SSU104 and SSU105 to be mutually connected, the switch unit SSU103 may be controlled by pulses to obtain the output shown in Fig 8. If we want to trim the adjustment of a voltage larger than that of a single battery, we can do so by means of one of the electro-mechanical switches. Because of the stepped basic voltage, the ripple-wave value is lower than that obtained by adjustment of the whole voltage directly.

If the linear or pulse control ripple range and stepped basic voltage are made up of batteries of equal voltage, in order to seek an average electrical consumption, the CCU can further be used to periodically alternate control of the solid state switch, so as to switch between batteries to alter the basic voltage supply and adjusting range, or to control the modulation to like effect.

We can further serially connect the measuring device CT100 to the output circuit so as to measure its output current value, and feed it back to the CCU; and, according to input instructions or a pre-set value in the CCU, control mutually and relatively the electro-mechanical switches and the solid state switch. At the output terminal, the measuring device VT100 can be parallel connected so as to measure the output voltage value, which is also fed back to the CCU; and, in accordance with input instructions or a pre-set value, mutually control the solid state switch and the electro-mechanical switches. Similar to the conventional steady voltage circuit, because this circuit has a standard potential, in addition to adjusting the voltage change caused by an unsteady load, it can adjust for load-side voltage changes caused by unsteady power voltage, such as drops in battery voltage due to reduced storage capacity, or where voltage is unsteady in a solar battery because of varying amounts of sunlight.

As in the earlier embodiments, by including a series-connected solid state switch SSS100 in the circuit, it functions as a constant adjusting component between the stepped voltage of linear and pulse control; that is, by means of linear adjustment or PWM adjusting control disposed in series with a battery and a diode, and by appropriate control of the on-off switches to stop the compound voltage output, the lower step becomes a voltage minimum, and the higher step becomes a peak for a continuous linear or PWM adjusted output voltage, and thus can be made into a low ripple-wave voltage output, or a slowly rising or slowly dropping voltage.

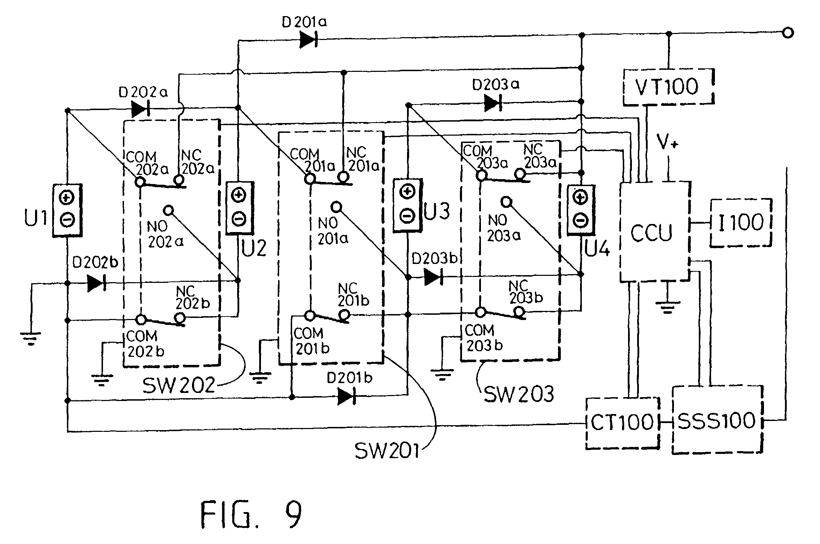

Another application of the preferred circuit is shown in Fig 9. This embodiment includes two or more sets of battery units of like voltage and capacity, or at least of like voltage, and branch-connected switches for changing the serial/parallel connections between the batteries so as to further change their output voltage. When outputting, the circuit shunts the ends of the diodes so as to eliminate their direct voltage drops and thermal loss, and can further be combined with a current measurement device and a linear or switch-mode solid state switch, and with a central control unit CCU to accept operation orders from an input device I100 so as to control the electro-mechanical switches and the solid state switch for adjusting the output voltage, or for setting the limits of output current value; and, by means of linear adjustment or PWM control of the solid state switch disposed in series with a battery and a diode, in combination with control of the electro-mechanical switches to step the compound voltage so that a low voltage becomes a minimum and a high voltage becomes a peak, a low ripple-wave or PWM controlled voltage output can be obtained between the minimum and peak voltages. When one of the electro-mechanical switches is turned on, the time of operation of the solid state switch is suspended at the on position; and, when it is turned off, the solid state switch is cut off before the electro-mechanical switches to cut off the power supply, and thereby protect the electro-mechanical switches from sparking as they are turned on and off.

More specifically, in the embodiment of Fig. 9, the positive pole of the battery U1 and the switch SW202 have a common contact COM202a, directly series-connected to a diode D202a, and thereby to the positive terminal of the battery U2. A common contact COM201a of the series-connected switch SW201 is directly connected in series with a diode D201a, and is then connected to the positive output terminal of the voltage supply. The negative terminal of the battery U1 is connected to the negative output of the circuit, and in series with the common contact COM202b of the switch SW202, and directly to a series-connected diode D202b. The positive output end of the diode D202b is further connected to the open contact NO202a of the switch SW202 and to the closed contact NC202b, which are commonly connected to the negative terminal of the battery U2. The negative end of the battery U1 is series-connected to the common contact COM201b of the switch SW201, and then directly to a series-connected diode D201b, the positive output end of the diode D201b being connected to the closed contact MC201b of the switch SW201, to the open contact NO201a, to the common contact COM203b of a series-connected switch SW203, to the negative terminal of the battery U3, and then directly to a series-connected diode D203b. Finally, the positive output end of the diode D203b is connected to the closed contact NC203b of the switch SW203, and to the negative terminal of the battery U4.

After the positive terminal of the battery U3 is connected to the common contact COM203a of the series-connected switch SW203, they are directly connected to the diode D203a, the positive output end of the diode D203a being connected to the closed contact NC203a of the series-connected switch SW203, to the positive terminal of the battery and to the positive output terminal of the circuit.

Finally, the closed contact NC202a of the switch SW202 and the closed contact NC201a of the switch SW201 are connected to the positive output terminal of the circuit.

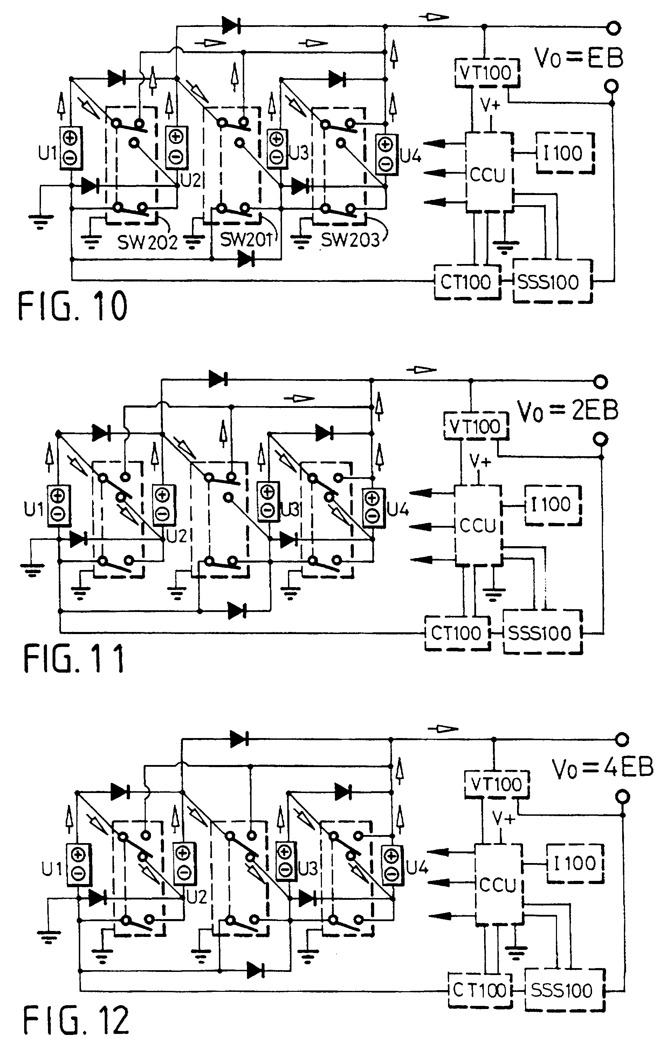

The circuit control of this embodiment is characterised in that:
1. When the switches SW201, SW202 and SW203 do not operate, the batteries U1 to U4 are connected to the switch contacts and output a low voltage because of their paralell connection; that is one times the voltage of a single battery as shown in Fig 10, which is a view of the low voltage output situation of Fig 9.
2. When the switches SW202 and SW203 are in operation, the battery U1 is serially connected to the battery U2, the battery U3 is serially connected to the battery U4, and these two serially-connected battery pairs are parallel connected to output a voltage of twice that of a single battery, as shown in Fig 11, which is a view of the medium voltage output situation for the circuit of Fig.9.
3. When the switches SW201, SW202 and SW203 are in operation, the batteries U1 to U4 are serially-connected so as to output a voltage of four times that of a single battery, as shown in Fig 12, which is a view of the high voltage situation for the circuit of Fig. 9.

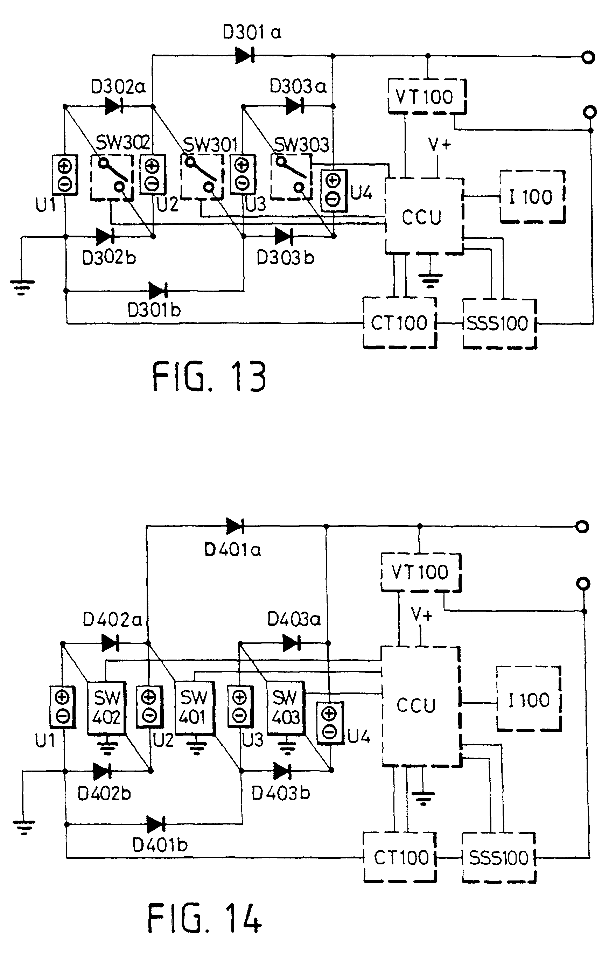

Fig 13 shows an embodiment with single-pole switches SW301, SW302 and SW303 in combination with pairs of diodes D301a, D301b, D302a, D302b and D303a, D303b. This circuit also includes a current measurement device CT100, a linear or switch-mode solid state switch SSS100, and a central control unit CCU connected to accept commands from an input device I100 so as to control the electro-mechanical switches and the solid state switch for adjusting the output voltage, or to set the limits of the output current value. Again, by linear adjustment or PWM control of the solid state switch which is disposed in series with the batteries and the diodes, together with appropriate control of the on-off switches which provide the basic stepped compound voltage output, the low voltage becomes a minimum and the high voltage becomes a peak, and a low ripple-wave voltage output forms between the minimum and peak voltages, and is controlled by linear adjustment or pulse modulation. Also, as in previous embodiments, when an electro-mechanical switch is turned on, the time of operation of the solid state switch is suspended at the on position; and, when it is turned off, the operation time of the solid state switch precedes that of the electro-mechanical switches to cut off the power supply, and thereby protect the electro-mechanical switches from sparking as they are turned on and off. This embodiment is similar to that of Fig. 9, but uses single-pole, single-throw switches SW301, SW302 and SW303 in place of the double-pole, double-throw switches of Fig 9. This circuit operates in a similar manner except the series-connected switches cannot eliminate the forward bias voltage drops of the diodes, all other functions being the same as for the circuit shown in Fig 9.

Alternatively, linear or solid state switch members SW401, SW402 and SW403 would replace the switches SW301, SW302 and SW303. Thus, referring to Fig 14, the disposition and function of the diodes D401a, D401b, D402a, D402b, D403a and D403b are the same as for the circuit of Figs 9 and 13, and the switch function of this circuit is the same as that of Fig 13. In this embodiment, the switch members still function as switches, and a series-connected solid state switch SSS10 can be added to the circuit to provide linear functions as in Fig 7, or to function as a continuous adjusting component between the stepped voltages of the PWM control as in Fig 8.

The stepped compound voltage supplies of Figs 9 to 14 have many advantages. For example, their circuit control is suitable for stepped compound voltage control of a plurality of independent DC power units, or AC power units provided with commutation. They can eliminate sparking, and enable constant adjustment using feedback control and linear or pulse modulation of voltage and current.

In practice, the switch members between adjacent batteries can be electro-mechanical switches or solid state switches.

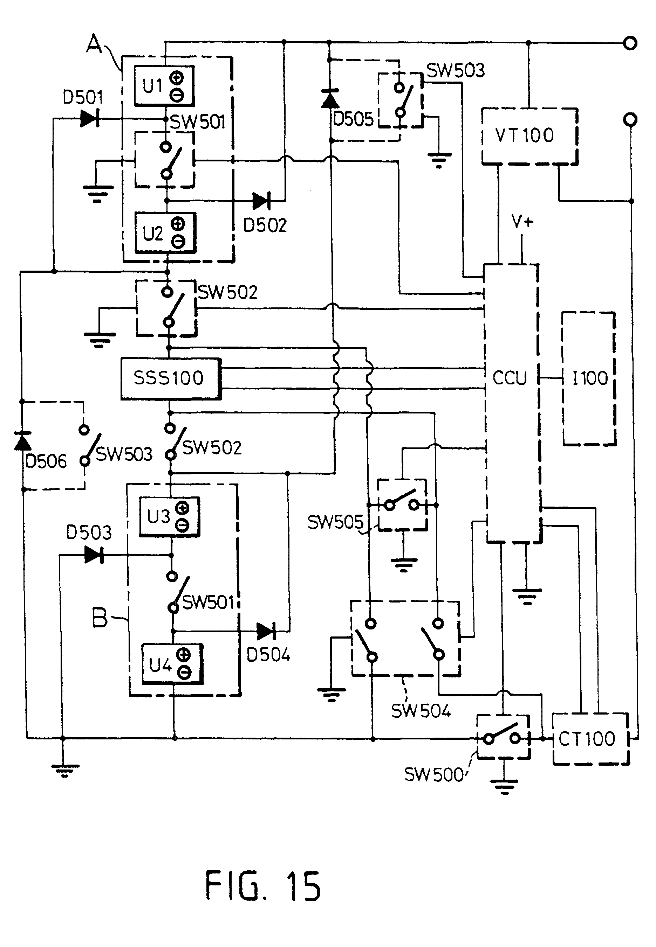

Each of these embodiments could be modified to use a single solid state switch member for linear or pulse modulation control of the output between each stepped voltage (as shown in Figs 7 and 8). This can be achieved with the circuit shown in Fig 15. Thus, Fig 15 shows a stepped compound voltage supply having an on-off switch for controlling a commonly used solid state switch member which is used to linearly adjust between each step voltage. In this embodiment, the power supply has batteries U1 to U4, each of which has a voltage of EB and is made up of two or more sets of batteries of identical voltage and capacity, or at least of identical voltage. As before, the batteries U1 to U4 can be serial/parallel connected to provide:
(1) when the batteries U1 to U4 are connected in parallel the voltage ouput of the supply is EB;
(2) when the batteries U1 and U2 are in series and parallel-connected to the batteries U3 and U4, the voltage output in 2 x EB;
(3) when the baatteries U1 to U4 are all in series, the voltage output is 4 x EB.

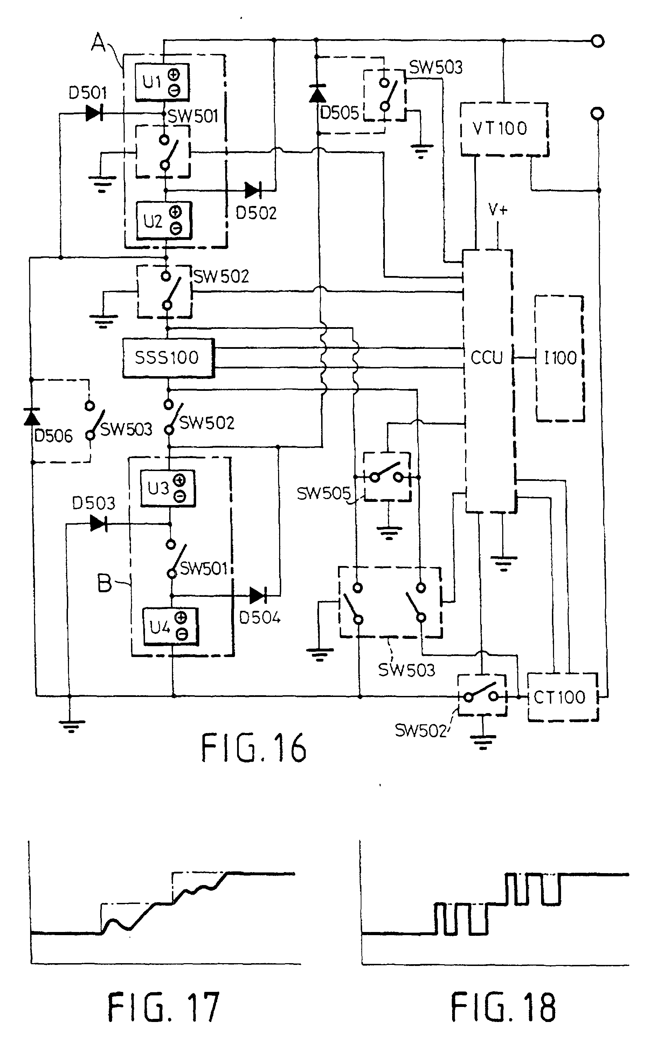

A respective control switch SW501 is positioned between the batteries U1 and U2 and between the batteries U3 and U4. A solid state switch SSS100 is positioned between the two pairs of batteries U1, U2 and U3, U4, a respective switch SW502 being interposed. A diode D501 is connected across the switch SW501 and the battery U2, and a diode D506 is connected across the two switches SW502 and the battery pair U3, U4. A switch SW503 is connected in parallel with the diode D506. This switch is closed when the batteries are in parallel so as to eliminate the thermal loss of the diode D505. A diode D503 is connected in parallel with the battery U3 and the adjacent switch SW501. A diode D504 is connected across the positive terminals of the batteries U3 and U4. A diode D505 is connected across the two switches SW502 and the battery pair U1, U2. A switch SW503 is connected in parallel with the diode D505. This switch is closed when all the batteries are in parallel so as to eliminate the thermal loss of the diode D505. A diode D502 is connected in parallel with the battery U1 and the adjacent switch SW501. The opposite ends of the solid state switch SSS100 are respectively connected in series to the two independent contact sets of a control switch SW504. These two contact sets are then connected to the opposite ends of an output switch SW500 which is in series with an ouput circuit. When the solid state switch SSS1000 adjusts its linear or pulse modulation between step voltages, the switch SW500 is turned on and off, selectively outputting current, especially when the batteries are all in parallel. When the solid state switch SSS100 adjusts the output power, the switch SW500 is open, and the output of the solid state switch turns the switch SW504 on and off. In the output circuit, the solid state switch initiates linear or pulse modulated output at low voltages; but, at low voltages, it continually initiates the largest amount of output. The output switch SW500 can be closed to eliminate forward bias voltages. If this function is not needed, the output switch SW500 can be replaced by a set of constantly open contact points constituted by a series control switch SW502, and the control switch SW504 can be replaced by two sets of independent constantly open contact points constituted by a series on-off switch SW503 (as shown in Fig 16). Moreover, as the auxiliary switch SW505 is connected in parallel with the opposite ends of the solid state switch SSS100, its contact points are closed when the solid state switch is fully conducting in every step voltage range, so as to eliminate forward bias voltages and thermal losses.

This circuit can be controlled to provide a stepped compound voltage output, and the number of batteries can be increased to increase the voltage output. It is switched in the same manner as that of the circuit of Figures 1, 4 and 5, the only difference being that its batteries are divided into two symmetrical series sets A and B, one end of each set being connected to the positive and negative terminals of the voltage supply unit. The other ends of the two sets are connected to the opposite sides of the solid state switch SSS100 which is series with the on-off switch, and then is connected to the same polar ends of that set by a diode or an on-off switch as illustrated in Fig 15. The negative end of set A is connected to the negative terminal of the supply unit via the switch SW503 and the diode D506. When the voltage supply unit has a low voltage output, the negative end of the battery U1 is connected to the diode D501, and the negative end of the set is connected to the positive output terminal of the supply unit by the switch SW503 and the diode D505. When the voltage supply unit has a low voltage ouput, the positive end of the battery U4 is connected by the diode D504. In practice, the diodes and/or the switches can be freely selected to be used as current-conducting elements. If two-phase operation is required, the circuit structure can supply power or initiate inverse-phase input of charge. When a two-phase solid state switch is used, it can adjust linear or pulse modulated inputs. Chart 1 shows the states of each switch.

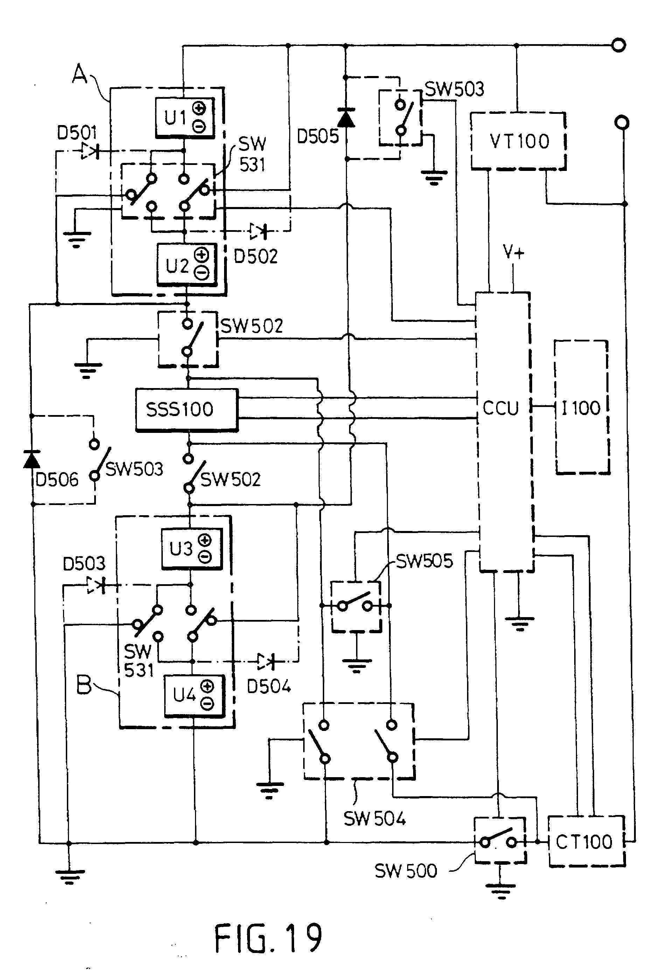

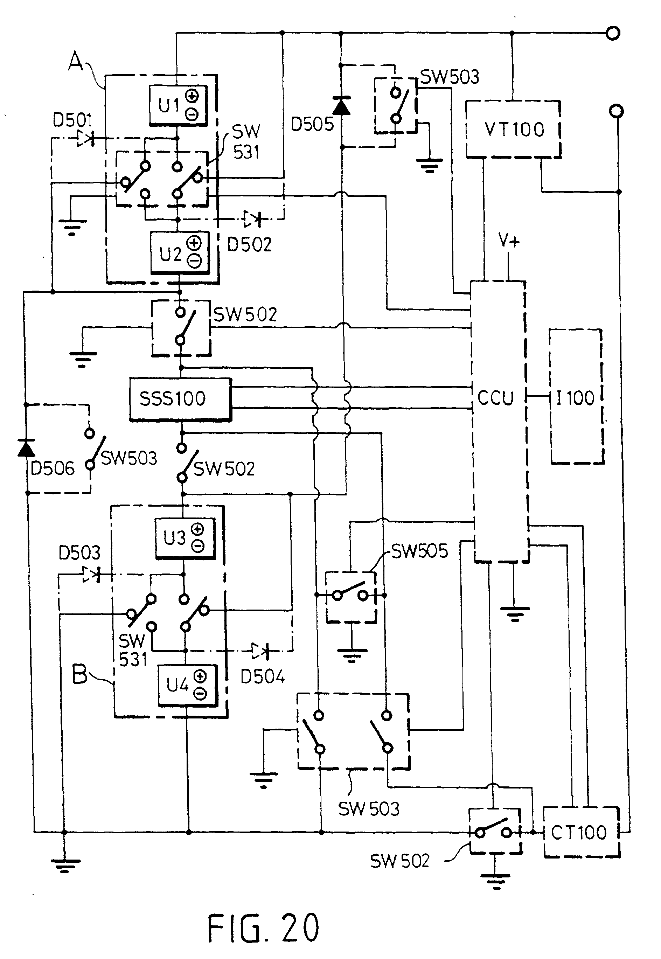

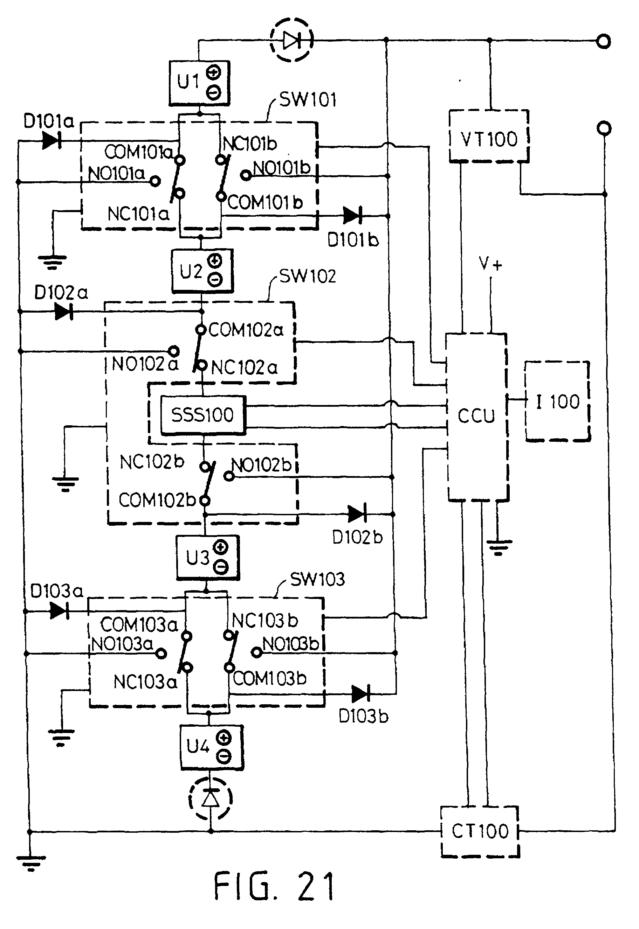

Fig 16 shows this circuit in operation. At a high ouput current, the diodes will lose their power, and will become hot, because of forward bias voltage drops. In order to avoid the thermal loss and voltage drop, the initial control switches SW501 can be replaced by two-pole, two-throw control switches SW531, as shown in Fig 19. As shown in Fig 20, the switch SW500 can be replaced by a switch SW502, and the switch SW503 can replace the switch SW504, if there is no requirement for output adjustment when low voltage is output. Besides, as far as economy is concerned, low-cost power supply circuits are shown in Figs 21 to 23.

As shown in Fig 21, which is based on Fig 20, two-pole, two-throw switches replace the switches SW502 of Fig 20, and the switch SW503 is omitted. The terminals of the solid state switch SSS100 are connected to synchronous switches SW102 which are connected to the respective section of the batteries.

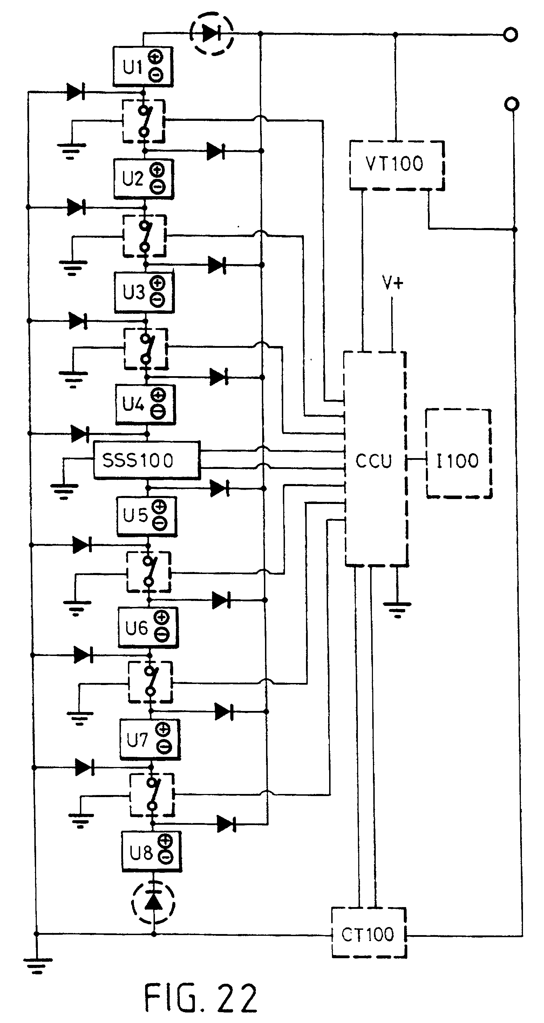

Fig 22 shows another low-cost embodiment (which is based on the embodiment of Fig 5). Here, however, the solid state switch SSS100, which is provided for the adjustment of linear or pulse modulated voltage, is connected between respective batteries U4 and U5.

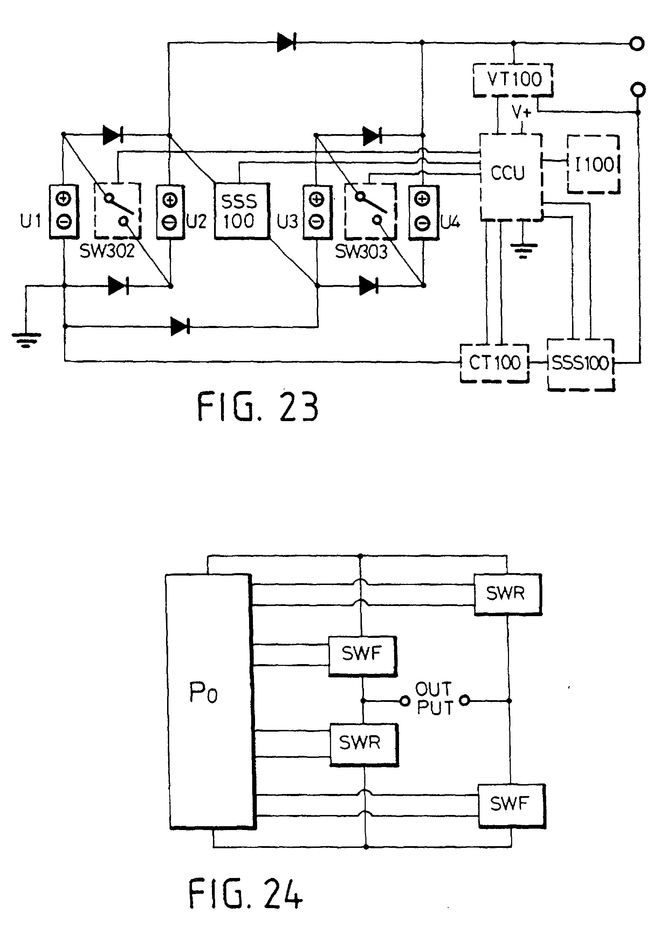

Fig 23 shows a modification of the circuit of Fig 13, the switch SW301 in Fig 13 being replaced by the solid state switch SSS100. In practice, the power supply of the present invention can be combined with a bridge switch member to supply AC output voltage. Less costly and more efficient design is proposed herein in order to convert DC ouput to AC output. As shown in Fig 24, four sets of bridge connected liquid crystals (or electro-mechanical switches) have output terminals and input terminals which are connected to the power supply Po of the invention. The bridge switch member is controlled by the CCU so that, when its two switch member sets SWF are in the "on" position, current flows through a load connected to the output; and, when the other two switch member sets SWR are in the "on" position, current flows through the load in the reverse direction.

Each conducting current period includes a stepped voltage power supply turning from zero to low, from low to high, from high to low, and then from low to zero. This cycle is repeated to obtain an approximately sine wave DC output.

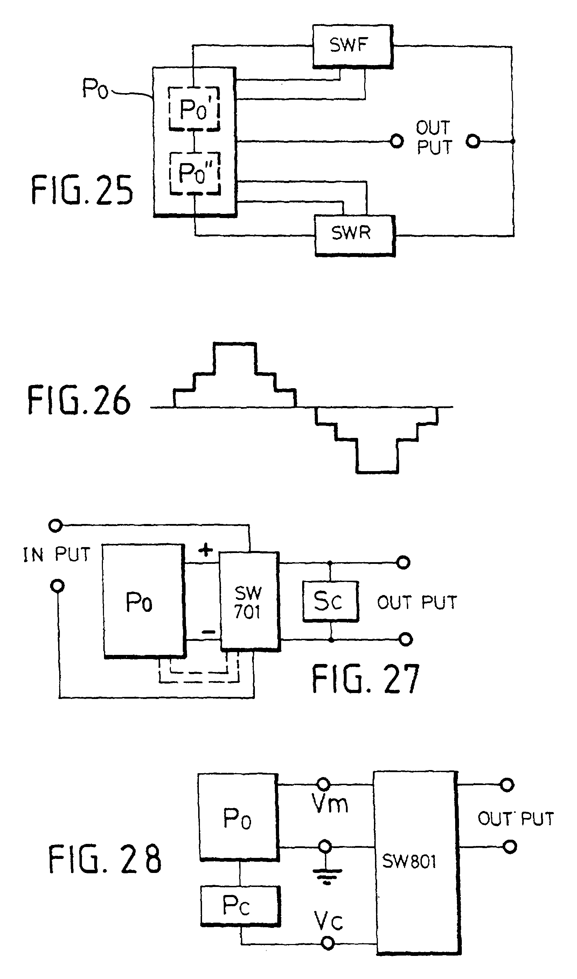

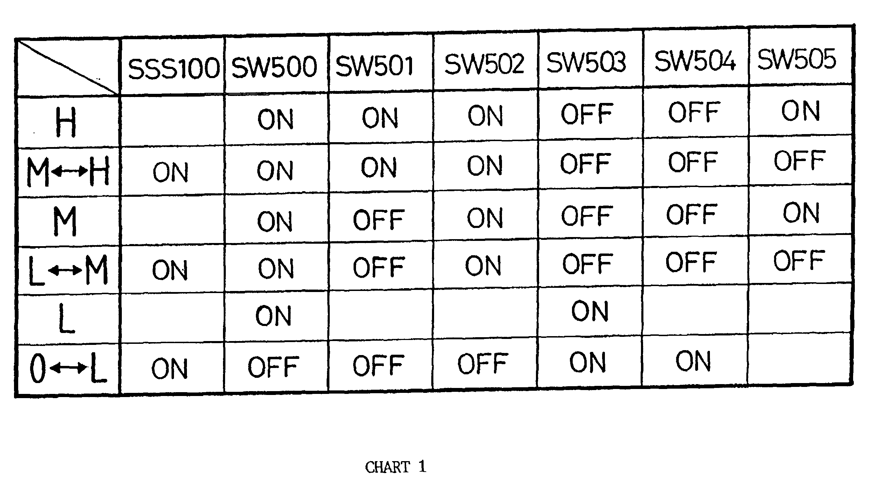

This circuit can be formed into a bridge circuit (as shown in Fig 25) by connecting a plurality of power units (Po', Po") and by connecting two sets of switch members. The power unit composed of the power units Po' and Po" supplies the output voltage to the load via a contact point. The bridge switch member can be formed by two sets (SWF and SWR). One set SWF is connected to the positive terminal of the power unit Po, while the other set SWR is connected to the negative terminal of Po. The other terminals of the two switch members are connected together to the other terminal of the load. The timing diagram of the output is shown in Fig 26.

The circuit can include single-unit, single-phase, or multi-unit, multi-phase embodiments.

Besides, according to the load requirements, power wave forms include triangular, rectangular, recessive, calculus, or integral wave forms. We may directly ouput DC pulses by controlling the wave form that is needed for conversion at the output voltage by means of the CCU, or by synchronously operating the bridge circuit.

Again, power units of this system can supply and store power, so that two-phase conducting elements can be used to control the power units, and to adjust the solid state switch.

Said circuit can be further modified to form a DC to DC converter. It can also perform a dynamic feedback function by re-arranging its series-parallel connections so as to accept different voltage inputs and different voltage outputs respectively. It includes the following forms:
1. A low voltage input and a high voltage output.
2. A high voltage input and a low voltage output.
3. The same voltage input and the same voltage output.
4. A long time small current input and a short time large current output.
5. A short time large current input and a long time small current output.
6. The power unit is structured by battery or capacity for mutual DC input-output operation.
7. AC output is initiated by fitting the DC input to its bridge switch circuit.

As shown in Fig 27 its main structure is as follows:

A power unit Po, which can initiate stepped voltage control output by means of two-phase series-parallel switches, is connected to a two-phase distribution control switch SW 701. The switch SW701 may be an electro-mechanical or a solid state switch to accept control from the CCU, and to provide selective connection with the power unit for the output of stepped voltage, or for dynamic feedback from the output terminal; and, when needed, to intiate connection between the input and output terminals.

If the output is a DC output, it can be viewed as if it needs to connect an auxiliary storage battery SC. If the output is an AC output, it needs to connect a parallel LC resonant storage device of electrical induction and capacity.

Another embodiment is shown in Fig 28, which shows a main power unit Po, a CCU and a control interface having a positive output terminal Vm and a negative output terminal Vc which is earthed. An auxiliary power unit PC is connected between the main power unit Po and the negative output terminal Vc to form an ouput connected to a distribution control switch SW801. The distribution control switch SW801 can switch the output terminals to be either stepped voltage Vm + Vc or stepped voltage Vm, or single voltage Vc.

If the voltage Vc needs to be combined with another load, it can be selected to enlarge its capacity according to its need.

Said circuit may accept any wave shape DC input, and may ouput a required wave shape by means of a control output on-off switch.

The control process of said application forms the switching function by means of the CCU to control the power unit to combine series-parallel switch members. We may devise a DC to DC converter, a DC UPS of different input-output voltage, a DC to AC UPS, a charger, electro-chemical equipment, an electric soldering machine, or other DC power supplies. To illustrate the function of this circuit, the following example is given. If 12 12V storage batteries form the circuit in Fig 22, and an auxiliary battery is added to it, the possible ouputs are:
1. if the 12 batteries are in parallel, the output is 12V;
2. if there are 6 parallel pairs of series-connected batteries, the output is 24V;
3. if there are 4 parallel triplets of series-connected batteries, the ouput is 36V;
4. if there are 3 parallel quadruplets of series-connected batteries, the output is 48V;
5. if there are 2 parallel sextuplets of series-connected batteries, the output is 72V;
6. if all the batteries are in series, the output is 144V.

When the auxiliary battery is added, it increases the potential steps to include 6V, 18V, 30V, 42V, 54V, 78V and 150V.

In practice, we can select the voltage of the auxiliary power unit according to need, or the auxiliary battery can be a compound voltage supply unit which would increase the number, and size, of the steps in the output voltage. The main power supply unit and the auxiliary battery could be storage batteries, fuel cell batteries, thermal batteries or other electro-mechanical batteries, solar batteries or AC power supply rectified DC power units.

## Claims

1. A power supply unit with controlled output voltage comprising a plurality of substantially identical independent DC power supplies (U1-U6) which are interconnected by a central control unit (CCU) in a series or parallel arrangement for providing a required output voltage between positive and ground output terminals in a wide range of output voltages, and wherein each independent DC power supply (U1-U6) has positive and negative terminals, the power supply unit further comprising a plurality of switching means (SW101-SW105, SSU101-SSU105, SW201-SW205, SW301-SW305, SW401-SW405, SW501-SW505) which are electro-mechanical and/or solid state switches, each of the switching means being connected between the negative terminal of one of the independent DC power supplies (U1-U6) and the positive terminal of a respective succeeding independent DC power supply, such that each of the switching means can be turned on and off by the central control unit (CCU) to provide a series and/or parallel connection between the independent DC power supplies (U1-U6), **characterised in that** the power supply unit further comprises a plurality of pairs of diodes (D101a,D101b etc) each pair of diodes being associated with a respective switching means (SW101-SW105 etc), wherein each pair of diodes has first (D101a) and second diodes (D101b) and wherein each of the diodes has anode and cathode terminals, wherein the first diode of each pair is connected by its cathode terminal to both the respective switching means (SW101-SW105 etc), and the negative terminal of one of the independent DC power supplies, and the second diode (D101b) of that pair is connected by its anode terminal to both the switching means (SW101-SW105 etc), and the positive terminal of a respective succeeding independent DC power supply, wherein the anode terminals of all the first diodes (D101a etc) are commonly connected to ground, and wherein the cathode terminals of all the second diodes (D101b etc) are commonly connected to the positive output terminal, and **in that** the power supply unit further includes means (I100) controlling at least one of the switching means (SW101-SW105 etc), for controlling a magnitude and a shape of the required output voltage waveform, said means (I100) controlling the switch means (SW101-SW105) via the central control unit (CCD) **in that**, said means (I100) for controlling the magnitude and the shape of the required output voltage waveform includes a solid state switch (SS100) connected between ground and the ground output terminal for selectively connecting and disconnecting the power supplies (U1-U6) to the output of the unit and operates to switch off the circuit before the switch means (SW101-SW105 etc), are switched by the central control unit (CCU) and back on shortly thereafter whereby non-sparking switching is achieved.

2. A power supply unit according to claim 1, **characterised in that** each independent DC power supply (U1-U6) provides a terminal voltage EB, wherein the required output voltage may have a value of N x EB, wherein N = 1,2,3..., wherein an unwanted disturbance of the shape of the output voltage waveform and an undesired sparking while switching from one value of the output voltage to another value of the output voltage may take place during a series-parallel re-arrangement of the independent DC power supplies (U1-U6), **in that** said solid state switch (SSS100) controls at least one of said switching means (SW101-SW105 etc), to operate in a predetermined order, thereby providing a non-sparking switching and low-ripple output voltage.

3. A power supply unit according to claim 1 or 2, **characterised in that** the output voltage waveform may be of a linear, chopped or pulse-width modulated shape.

4. A power supply unit according to any one of claims 1 to 3, further comprising an input unit for setting the operational order for the central control unit according to a pre-determined set of required output voltages.

5. A power supply unit according to any one of claims 1 to 4, **characterised by** a measuring device (VT100) for measuring the output voltage on the output terminals and providing feedback to the central control unit (CCU).

6. A power supply unit according to any one of claims 1 to 5, **characterised in that** each independent DC power supply (U1-U6) may be the composition of independent battery units, or may be an AC power supply with an output rectified to supply DC power.

7. A power supply unit according to any one of claims 1 to 5, **characterised in that** each DC power supply (U1-U6) is a solar power source.

8. A power supply unit according to any one of the preceding claims, **characterised in that** each switching means (SW101-SW105 etc) includes two switches in parallel with each other disposed between consecutive power supplies (U1-U6).

9. A power supply unit according to any one of claims 1 to 7 **characterised in that** each switching means (SW101-SW105 etc.) includes a single switch disposed between consecutive power supplies (U1-U6).

10. A power supply unit according to any one of claims 1 to 8, **characterised in that** each of the switch units (SW101-SW105 etc) is constituted by a solid state switch provided with electro-mechanical switch contacts at its input and output.

11. A power supply unit as claimed in claim 8, **characterised in that** each of the switch units (SW101-SW105 etc) is an electro-mechanical switch having first and second common contacts, first and second normally-closed contacts, and first and second normally-open contacts, the first common contact of each electromechanical switch being connected to the second normally-closed contact of that switch, and the second common contact being connected to the first normally-closed contact of that switch.

12. A power supply unit as claimed in claim 11, **characterised in that** each of the electro-mechanical switches is connected between a respective pair of battery units (U1-U6), the arrangement being such that the negative terminal of each battery unit is connected to both the first common contact and the second normally-closed contact of an associated electro-mechanical switch, and the positive terminal of an adjacent battery unit is connected to the first normally-closed contact and the second common contact of said switch; whereby, when each electro-mechanical switch is actuated by the central control unit (CCU), the respective common contacts are connected to the respective normally-open contacts or to respective normally-closed contacts, thereby providing serial or parallel connection of each battery unit.

13. A power supply unit according to one of the preceding claims, **characterised by** a current measuring device (CT100) connected in series with the solid state switch (SSS100), the current measuring device (CT100) providing feedback signals to the central control unit (CCU).

14. A power supply unit as claimed in any one of claims 1 to 13, **characterised in that** the solid state switch (SSS100) is a device arranged to linearly change impedence characteristics between an ON state where impedence is low, to an OFF state where impedence is high enough to cut off current.

15. A power supply unit as claimed in any one of claims 1 to 13, **characterised in that** the solid state switch (SSS100) is a chopped-wave switch.

16. A power supply unit as claimed in any one of claims 1 to 13, **characterised in that** the solid state switch (SSS100) is a pulse width modulated switch.

17. A power supply unit according to any one of the preceding claims, **characterised in that** the unit is a DC-AC converter comprising a plurality of further switch units connected together to form a bridge circuit for reversing the polarity of the voltage output by the supply unit, the bridge circuit being positioned between the power supplies (U1 - U6)and the positive and ground output terminals, the central control unit (CCU) controlling the bridge circuit in such a manner that an alternating step function output voltage is produced between the output terminals, and such that the step function output voltage is controlled synchronously with the bridge circuit, thereby to maintain a synchronous relationship between the zero point of the step function output voltage and the polarity reversal of the bridge circuit.

18. A power supply unit as claimed in claim 17, **characterised in that** the power supplies (U1 - U6) are first, second, third, fourth, fifth and sixth battery units, a first switch unit between the negative terminal of the first battery unit (U1) and the positive terminal of the second battery unit (U2), a second switch unit (SSS100) between the negative terminal of the second battery unit (U2) and the positive terminal of the third battery unit (U3), a third switch unit between the negative terminal of the third battery unit (U3) and the positive terminal of the fourth battery unit (U4), a fourth switch unit between the negative terminal of the fourth battery unit (U4) and the positive terminal of the fifth battery unit (U5), and a fifth switch unit between the negative terminal of the fifth battery unit (U5) and the positive terminal of the sixth battery unit (U6), wherein at least one of the five switch units is actuable by the central control unit to connect the battery units in said series and/or parallel arrangements.

19. A power supply unit as claimed in claim 18, **characterised in that**, in a first operating position of the first, second, third, fourth and fifth switch units, the first, second, third, fourth, fifth and sixth battery units (U1 - U6) are in parallel, and the output voltage is the terminal voltage of each battery unit; when the first, third and fifth switch units are in a second operating position, the first and second battery units (U1, U2), the third and fourth battery units (U3, U4) and the fifth and sixth battery units (U5, U6), respectively, are connected in series, and the series-connected first and second battery units (U1, U2) are in parallel with the series-connected third and fourth battery units (U3, U4), and are in parallel with the series-connected fifth and sixth battery units (U5, U6), and the output voltage is twice the terminal voltage of each battery unit; and, when all five switch units are in the second operating position the first, second, third, fourth, fifth and sixth battery units (U1 - U6) are connected in series, and the output voltage is six times the terminal voltage of each battery unit.

20. A power supply unit according to claim 17, **characterised in that** the power supplies are constituted by first, second, third and fourth battery units (U1 - U4), a first switch unit (SW302) between the first and second battery units (U1, U2), a second switch unit (SSS100) between the second and third battery units (U2, U3), and a third switch unit (SW303) between the third and fourth battery units (U3, U4), each of the switch units having first and second contacts.

21. A power supply unit as claimed in claim 20, **characterised in that** the shunt diodes include first, second, third, fourth, fifth and sixth diodes, the positive terminal of the first battery unit (U1) being connected to the first contact of the first switch unit (SW302) and to the anode terminal of the first diode, the negative terminal of the first battery unit (U1) being connected to the anode terminal of the second diode, to the anode terminal of the fourth diode, and to the ground output terminal, the positive terminal of the second battery unit (U2) being connected to the cathode terminal of the first diode, to the anode terminal of the third diode, and to the first contact of the second switch unit (SSS100), the negative terminal of the second battery unit (U2) being connected to the second contact of the first switch unit (SW302), and to the cathode terminal of the second diode, the positive terminal of the third battery unit (U3) being connected to the anode terminal of the fifth diode and to the first contact of the third switch unit (SW303), the negative terminal of the third battery unit (U3) being connected to the second contact of the second switch unit (SSS100), the anode terminal of the sixth diode, and to the cathode terminal of the fourth diode, the positive terminal of the fourth battery unit (U4) being connected to the cathode terminal of the fifth diode, to the cathode terminal of the third diode, and to the positive output terminal, the negative terminal of the fourth battery unit (U4) being connected to the second contact of the third switch unit (SW303), and to the cathode terminal of the sixth diode; wherein, in a first operating position of the first, second and third switch units (SW302, SW303, SSS100), the first, second, third and fourth battery units (U1 - U4) are in parallel, and the voltage between the output terminals is the terminal voltage of each battery unit; wherein, when the first and third switch units (SW302, SW303) are in a second operating position, the first and second battery units (U1, U2) are connected in series, the third and fourth battery units (U3, U4) are connected in series, the series-connected first and second battery units (U1, U2) are in parallel with the series connected third and fourth battery units (U3, U4), and the voltage between the output terminals is twice the terminal voltage of each battery unit; and wherein, when the first, second and third switch units are in the second operating position, the first, second, third and fourth battery units (U1 - U4) are all in series, and the voltage between the output terminals is four times the terminal voltage of each battery unit.

## Patentansprüche

1. Spannungsversorgungsschaltung mit kontrollierter Ausgangsspannung mit einer Vielzahl von im wesentlichen identischen, voneinander unabhängigen Gleichspannungsversorgungen (U1 - U6), die von einer zentralen Steuereinheit (CCU) in einer Reihen- oder Parallelanordnung so verschaltet werden, dass sich zwischen einer Plus- und einer Masseklemme innerhalb eines breiten Bereichs von Ausgangsspannungen eine Soll-Ausgangsspannung ergibt, wobei jede der unabhängigen Gleichspannungsversorgungen (U1 - U6) einen Plus- und einen Minus-Anschluss hat und die Spannungsversorgungsschaltung auch eine Vielzahl von Schalteinrichtungen (SW101 - SW105, SSU101 - SSU105, SW201 - SW205, SW301 - SW305, SW401 - SW405, SW501 - SW505) aufweist, die als elektromechanische und/oder Festkörperschalter vorliegen und jeweils zwischen den Minus-Anschluss einer der unabhängigen Gleichspannungsversorgungen (U1 - U6) und den Plus-Anschluss einer nachfolgenden unabhängigen Gleichspannungsversorgung gelegt sind, wobei jede der Schalteinrichtungen sich von der Steuereinheit (CCU) ein- und ausschalten läßt, um zwischen den unabhängigen Gleichspannunsversorgungen (U1 - U6) eine Reihen- und/oder Parallelverbindung herzustellen, **dadurch gekennzeichnet, dass** die Spannungsversorgungsschaltung weiterhin eine Vielzahl von Diodenpaaren (D101a, D101b usw.) aufweist, die jeweils einer Schalteinrichtung (SW101 - SW105 usw.) zugeordnet sind, wobei jedes Diodenpaar eine erste Diode (101a) und eine zweite Diode (D101b) Diode (D101b) aufweist und die Dioden jeweils einen Anoden- und einen Kathodenanschluss haben und die erste Diode jedes Paars mit dem Kathodenanschluss an sowohl die zugehörige Schalteinrichtung (SW101 - SW105 usw.) als auch den Minus-Anschluss einer der unabhängigen Gleichspannungsversorgungen gelegt ist und die zweite Diode (D101b) des Paares mit ihrer Anode an sowohl die Schalteinrichtung (SW101 - SW105 usw.) als auch den Plus-Anschluss einer zugehörigen nachfolgenden unabhängigen Gleichspannungsversorgung gelegt ist, und wobei die Anodenanschlüsse aller ersten Dioden (D101a usw.) gemeinsam an Masse und die Kathodenanschlüsse aller zweiten Dioden (D101b usw.) gemeinsam an die positive Ausgangsklemme gelegt sind, und dass die Spannungsversorgungsschaltung weiterhin eine Einrichtung (I100) aufweist, die mindestens einer der Schalteinrichtungen (SW101 - SW 105 usw.) steuert, um eine Höhe und eine Wellenform der Soll-Ausgangsspannung zu steuern, wobei die Einrichtung (I100) die Schalteinrichtungen (SW101 - SW105) über die zentrale Steuereinheit (CCU) dahingehend steuert, dass die Einrichtung (I100) zum Steuern der Höhe und der Form der Soll-Ausgangsspannung einen Festkörperschalter (SS100) aufweist, der zwischen Masse und die Masse-Ausgangsklemme gelegt ist, um die Spannungsversorgungen (U1 - U6) wahlweise mit dem Ausgang der Einheit zu verbinden bzw. von ihm zu trennen, und betrieblich die Schaltung abschaltet, bevor die zentrale Steuerung (CCU) die Schalteinrichtungen (SW101 - SW105 usw.) schaltet, und kurz danach wieder einschaltet, so dass ein funkenfreies Schalten erreicht wird.

2. Spannungsversorgungsschaltung nach Anspruch 1, **dadurch gekennzeichnet, dass** jede unabhängige Spannungsversorgung (U1 - U6) eine Anschlussspannung EB liefert, wobei die Soll-Ausgangsspannung einen Wert N x EB mit N = 1, 2, 3 ..., haben kann und eine unerwünschte Störung der Form der Ausgangsspannungswelle und beim Umschalten von einem zu einem anderen Wert der Ausgangsspannung während einer Reihen-Parallel-Umordnung der unabhängigen Gleichspannungsversorgungen (U1 - U6) eine unerwünschte Funkenbildung auftreten kann, und dass der Festkörperschalter (SSS100) mindestens eine der Schalteinrichtungen (SW101 - SW105 usw.) so steuert, dass sie in einer vorbestimmten Reihenfolge arbeiten, um so ein funkenfreies Umschalten und eine Ausgangsspannung geringer Welligkeit zu erreichen.

3. Spannungsversorgungsschaltung nach Anspruch 1 oder 2, **dadurch gekennzeichnet, dass** die Wellenform der Ausgangsspannung linear, zerhackt ("chopped") oder impulsbreitenmoduliert sein kann.

4. Spannungsversorgungsschaltung nach einem der Ansprüche 1 bis 3 weiterhin mit einer Eingabeeinheit zum Setzen der Arbeitsreihenfolge für die zentrale Steuerung entsprechend einem vorbestimmten Satz von Soll-Ausgangsspannungen.

5. Spannungsversorgungsschaltung nach einem der Ansprüche 1 bis 4, **gekennzeichnet durch** eine Messeinrichtung (VT100) zum Messen der Ausgangsspannung an den Ausgangsklemmen und zur Rückmeldung an die zentrale Steuerung (CCU).

6. Spannungsversorgungsschaltung nach einem der Ansprüche 1 bis 5, **dadurch gekennzeichnet, dass** jede unabhängige Gleichspannungsversorgung (U1 - U6) sich aus unabhängigen Batterie- bzw. Akkumulatoreinheiten zusammensetzen oder ein Netzanschluss mit zwecks Erzeugung einer Gleichspannung gleichgerichteter Anschlussspannung sein kann.

7. Spannungsversorgungsschaltung nach einem der Ansprüche 1 bis 5, **dadurch gekennzeichnet, dass** dass es sich bei den Gleichspannungsversorgungen (U1 - U6) jeweils um Solar-Stromversorgungen handelt.

8. Spannungsversorgungsschaltung nach einem der vorgehenden Ansprüche, **dadurch gekennzeichnet, dass** jede Schalteinrichtung (SW101 - SW105 usw.) zwei parallel zueinander geschaltete Schalter aufweist, die zwischen aufeinanderfolgenden Spannungsversorgungen (U1 - U6) angeordnet sind.

9. Spannungsversorgungsschaltung nach einem der Ansprüche 1 bis 7, **dadurch gekennzeichnet, dass** jede Schalteinrichtung (SW101 - SW105 usw.) einen einzelnen Schalter aufweist, der zwischen aufeinanderfolgenden Spannungsversorgungen (U1 - U6) angeordnet ist.

10. Spannungsversorgungsschaltung nach einem der Ansprüche 1 bis 8, **dadurch gekennzeichnet, dass** jede der Schalteinheiten (SW101 - SW105 usw.) von einem Festkörperschalter dargestellt wird, der an seinem Ein- und seinem Ausgang mit elektromechanischen Schaltkontakten versehen ist.

11. Spannungsversorgungsschaltung nach Anspruch 8, **dadurch gekennzeichnet, dass** jede der Schalteinrichtungen (SW101 - SW105 usw.) ein elektromechanischer Schalter mit einem ersten und einem zweiten gemeinsamen Kontaktanschluss, einem ersten und einem zweiten Ruhekontaktanschluss sowie einem ersten und einem zweiten Arbeitskontaktanschluss ist, wobei der erste gemeinsame Kontaktanschluss jedes elektromechanischen Schalters mit dem zweiten Ruhekontaktanschluss dieses Schalters und der zweite gemeinsame Kontaktanschluss mit dem ersten Ruhekontaktanschluss dieses Schalters verbunden sind.

12. Spannungsversorgungsschaltung nach Anspruch 11, **dadurch gekennzeichnet, dass** jeder der elektromechanischen Schalter zwischen ein zugehöriges Paar Batterieeinheiten (U1 - U67) gelegt und die Anordnung so ist, dass der Minus-Anschluss jeder Batterieeinheit sowohl mit dem ersten gemeinsamen als auch dem zweiten Ruhekontaktanschluss eines zugehörigen elektromechanischen Schalters und der Plus-Anschluss einer angrenzenden Batterieeinheit mit dem ersten Ruhe- und dem zweiten gemeinsamen Kontaktanschluss des Schalters verbunden sind, wobei, wenn ein elektromechanischer Schalter von der zentralen Steuereinheit (CCU) betätigt wird, seine gemeinsamen Kontaktanschlüsse mit den zugehörigen Arbeitskontaktanschlüssen oder mit zugehörigen Ruhekontaktanschlüssen verbunden werden und so jede Batterieeinheit in Reihe oder parallel verschaltet wird.

13. Spannungsversorgungsschaltung nach einem der vorgehenden Ansprüche, **gekennzeichnet durch** eine Strommesseinrichtung (CT100), die in Reihe mit dem Festkörperschalter (SSS100) geschaltet ist und Rückmeldesignale an die zentrale Steuereinheit (CCU) liefert.

14. Spannungsversorgungsschaltung nach einem der Ansprüche 1 bis 13, **dadurch gekennzeichnet, dass** der Festkörperschalter (SSS100) ein Element ist, dessen Impedanzeigenschaften zwischen einem Durchschaltzustand mit niedriger Impedanz und einem Sperrzustand, in dem die Impdeanz hoch genug ist, um jeden Stromfluss zu sperren, sich linear ändern.

15. Spannungsversorgungsschaltung nach einem der Ansprüche 1 bis 13, **dadurch gekennzeichnet, dass** der Festkörperschalter (SSS100) ein Zerhackerschalter ("chopped-wave switch") ist.

16. Spannungsversorgungsschaltung nach einem der Ansprüche 1 bis 13, **dadurch gekennzeichnet, dass** der Festkörperschalter (SSS100) ein impulsbreitenmodulierter Schalter ist.

17. Spannungsversorgungsschaltung nach einem der vorgehenden Ansprüche, **dadurch gekennzeichnet, dass** die Schaltung ein Wechselrichter mit einer Vielzahl weiterer Schaltereinheiten ist, die zur einer Brükkenschaltung verschaltet sind, um die Polarität der Ausgangsspannung durch die Versorgungsschaltung umzuschalten, wobei die Brücke zwischen den Spannungsversorgungen (U1 - U6) und dem Plus- und dem Masseanschluss liegt, die zentrale Steuereinheit (CCU) die Brücke so steuert, dass zwischen den Ausgangsanschlüssen eine Schrittwechselspannung ent-Schrittwechselspannung entsteht und die Schrittwechselspannung synchron mit der Brücke so gesteuert wird, dass eine Synchronität zwischen dem Nullpunkt der Schrittwechselspannung und dem Polaritätswechsel der Brücke aufrecht erhalten bleibt.

18. Spannungsversorgungsschaltung nach Anspruch 17, **dadurch gekennzeichnet, dass** die Spannungsversorgungen (U1 - U6) eine erste, zweite, dritte, vierte, fünfte und sechste Batterieeinheit sind und dass eine erste Schaltereinheit zwischen den Minus-Anschluss der ersten Batterieeinheit (U1) und den Plus-Anschluss der zweiten Batterieeinheit (U2), eine zweite Schaltereinheit (SSS100) zwischen den Minus-Anschluss der zweiten Batterieeinheit (U2) und den Plus-Anschluss der dritten Batterieeinheit (U2), eine dritte Schaltereinheit zwischen den Minus-Anschluss der dritten Batterieeinheit (U3) und den Plus-Anschluss der vierten Batterieeinheit (4), eine vierte Schaltereinheit zwischen den Minus-Anschluss der vierten Batterieeinheit (U4) und den Plus-Anschluss der fünften Batterieeinheit (U5) und eine fünfte Schaltereinheit zwischen den Minus-Anschluss der fünften Batterieeinheit (U5) und den Plus-Anschluss der sechsten Batterieeinheit (U6) gelegt sind, wobei mindestens eine der fünf Schaltereinheiten von der zentralen Steuereinheit betätigbar ist, um die Batterieeinheiten in Reihe und/oder parallel zu schalten.

19. Spannungsversorgungsschaltung nach Anspruch 18, **dadurch gekennzeichnet, dass** in einer ersten Betriebsstellung der ersten, zweiten, dritten, vierte, fünften und sechsten Schaltereinheit die erste, zweite, dritte, vierte, fünfte und sechste Batterieeinheit (U1 - U6) parallel liegen und die Ausgangsspannung die Klemmenspannung jeder Batterieeinheit ist, dass in einer zweiten Betriebsstellung der ersten, dritten, und fünften Schaltereinheit die erste und die zweite Batterieeinheit (U1, U2, die dritte und die vierte Batterieeinheit (U3, U4) und die fünfte und die sechste Batterieeinheit (U5, U6) jeweils in Reihe liegen und die in Reihe geschaltete erste und zweite Batterieeinheit (U1, U2) parallel zu der in Reihe geschalteten dritten und vierten Batterieeinheit (U3, U4) und parallel zur in Reihe geschalteten fünften und sechsten Batterieeinheit (U5, U6) liegt, wobei die Ausgangsspannung gleich der zweifachen Anschlussspannung jeder Batterieeinheit ist, und dass, wenn alle fünf Schaltereinheiten sich in der zweiten Betriebsstellung befinden, die erste, zweite, dritte, vierte, fünfte und sechste Batterieeinheit (U1 - U6) in Reihe liegen und die Ausgangsspannung die sechsfache Anschlussspannung jeder Batterieeinheit ist.

20. Spannungsversorgungsschaltung nach Anspruch 17, **dadurch gekennzeichnet, dass** die Spannungsversorgungen aus einer ersten, zweiten, dritten und vierten Batterieeinheit (U1 - U4), einer ersten Schaltereinheit (SW302) zwischen der ersten und der zweiten Batterieeinheit (U1, U2), einer zweiten Schaltereinheit (SSS100) zwischen der zweiten und der dritten Batterieeinheit (U2, U3) und einer dritten Schaltereinheit (SW303) zwischen der dritten und der vierten Batterieeinheit (U3, U4) be-U4) besteht, wobei die Schaltereinheiten jeweils einen ersten und einen zweiten Kontaktanschluss aufweisen.

21. Spannungsversorgungsschaltung nach Anspruch 20, **dadurch gekennzeichnet, dass** die Nebenschlussdioden eine erste, zweite, dritte, vierte, fünfte und sechste Diode sind, dass der Plus-Anschluss der ersten Batterieeinheit (U1) mit dem ersten Kontaktanschluss der ersten Schaltereinheit (SW302) und dem Anodenanschluss der ersten Diode und der Minus-Anschluss der ersten Batterieeinheit (U1) mit dem Anoden-Anschluss der zweiten Diode, dem Anodenanschluss der vierten Diode und dem Masseausgang verbunden sind, dass der Plus-Anschluss der zweiten Batterieeinheit (U2) mit dem Kathodenanschluss der ersten Diode, dem Anodenanschluss der dritten Diode und dem ersten Kontaktanschluss der zweiten Schaltereinheit (SSS100) verbunden ist, dass der Minus-Anschluss der zweiten Batterieeinheit (U2) mit dem zweiten Kontaktanschluss der ersten Schaltereinheit (SW302) und dem Kathodenanschluss der zweiten Diode verbunden ist, dass der Plus-Anschuss der dritten Batterieeinheit (U3) mit dem Anodenanschluss der fünften Diode und dem ersten Kontaktanschluss der dritten Schaltereinheit (SW303) verbunden ist, dass der Minus-Anschluss der dritten Batterieeinheit (U3) mit dem zweiten Kontaktanschluss der zweiten Schaltereinheit (SSS100), dem Anodenanschluss der sechsten Diode und dem Kathodenanschluss der vierten Diode verbunden ist, dass der Plus-Anschluss der vierten Batterieeinheit (U4) mit dem Kathodenanschluss der fünften Diode, dem Kathodenanschluss der dritten Diode und der Plus-Ausgangsklemme ver-Ausgangsklemme verbunden ist, und dass der Minus-Anschluss der vierten Batterieeinheit (U4) mit dem zweiten Kontaktanschluss der dritten Schaltereinheit (SW303) und dem Kathodenanschluss der sechsten Diode verbunden ist, wobei in einer ersten Betriebsstellung der ersten, zweiten und dritten Schaltereinheit (SW302, SW303, SSS100) die erste, zweite, dritte und vierte Batterieeinheit (U1 - U4) parallel liegen und die Ausgangsspannung zwischen den Ausgangsklemmen gleich der Anschlussspannung jeder Batterieeinheit ist, wobei in einer zweiten Betriebsstellung der ersten und dritten Schaltereinheit (SW302, SW303) die erste und die zweite Batterieeinheit (U1, U2) in Reihe, die dritte and vierte Batterieeinheit (U3, U4) in Reihe und die in Reihe liegende erste und zweite Batterieeinheit (U1, U2) parallel mit der in Reihe geschalteten dritten und vierten Batterieeinheit (U3, U4) liegen und die Spannung zwischen den Ausgangsklemmen gleich der zweifachen Anschlussspannung jeder Batterieeinheit ist, und wobei in der zweiten Betriebsstellung der ersten, zweiten und dritten Schaltereinheit die erste, zweite, dritte und vierte Batterieeinheit (U1 - U4) allesamt in Reihe liegen und die Spannung zwischen den Ausgangsklemmen gleich der vierfachen Anschlussspannung jeder Batterieeinheit ist.

## Revendications

1. Unité d'alimentation électrique à tension de sortie commandée comprenant une pluralité d'alimentations (U1-U6) de courant continu DC indépendantes et sensiblement identiques qui sont inter-reliées à une unité centrale de commande (CCU) en série ou en parallèle pour fournir une tension de sortie requise entre les bornes de sortie positive et de terre à l'intérieur d'une large gamme de tensions de sortie et dans laquelle chaque alimentation DC (U1-U6) possède une borne positive et une borne négative, l'alimentation comportant en outre une pluralité de moyens d'interrupteur (SW101-SW105, SSU101-SSU105, SW301-5W305, SW501-SW505) du type électromécanique ou à semi-conducteur, chacun des moyens d'interrupteur étant relié entre la borne négative de l'une des alimentations (U1-U6) indépendantes DC et la borne positive de l'une des alimentation DC indépendantes successives, de façon que chaque moyen d'interrupteur peut être ouvert ou fermé par l'unité de commande (CCU) afin de former une liaison série et/ou parallèle entre les alimentations DC indépendantes (U1-U6) **caractérisée en ce que** l'unité d'alimentation électrique comprend en outre une pluralité de paires de diodes (D101a, D101b, etc.), chaque paire de diodes étant associée à un moyen d'interrupteur correspondant (SW101-SW105, etc.) dans laquelle chaque paire de diodes présente une première (D101a) et une seconde diode (D101b) et dans laquelle chacune des diodes possède des électrodes d'anode et de cathode, dans laquelle la première diode de chaque paire est reliée par son électrode de cathode au moyen correspondant d'interrupteur (SW101-SW105, etc.) et à la borne négative de l'une des alimentations indépendantes DC, et la seconde diode (D101b) de cette paire est reliée par son électrode d'anode au moyen d'interrupteur (SW101-SW105, etc.) et à la borne positive de l'alimentation indépendante successive correspondante dans laquelle les électrodes d'anode des deux premières diodes (D101a, etc.) sont reliées ensemble à la terre et dans laquelle les électrodes de cathode de toutes les secondes diodes (D101b, etc.) sont reliées ensemble à la borne positive de sortie et **en ce que** l'unité d'alimentation comprend en outre un moyen (I100) pour commander au moins un moyen d'interrupteur (SW101-SW105, etc.), pour la commande d'une amplitude et d'une forme d'onde de tension requise de sortie, ce moyen (I100) commandant le moyen d'interrupteur (SW101-SW105) à travers l'unité centrale (CCU) et **en ce que** ce moyen (I100) destiné à commander l'amplitude et la forme d'onde de tension requise de sortie comporte un interrupteur statique (SS100) monté entre la terre et la borne de terre de sortie pour mettre sélectivement en et hors circuit les alimentations (U1-U6) à la sortie de l'unité d'alimentation et actionner l'ouverture du circuit avant que les moyens d'interrupteur (SW101-SW105, etc.) soient commandés par l'unité centrale de commande (CCU) et fermés juste après de façon à ne pas occasionner d'étincelle de rupture.

2. Unité d'alimentation électrique selon la revendication 1, **caractérisée en ce que** chaque alimentation (U1-U6) de courant continu DC indépendante fournit une tension de borne EB, dans laquelle la tension de sortie requise peut avoir une valeur N x EB, dans laquelle N = 1, 2, 3..., dans laquelle une perturbation involontaire de la forme d'onde de la tension de sortie et une étincelle indésirable pendant la commutation d'une valeur de tension de sortie à une autre valeur de tension de sortie peuvent avoir lieu au cours d'une recomposition série-parallèle des alimentations (U1-U6) de courant continu DC indépendantes, **en ce qu'**un interrupteur à semi-conducteur (SSS100) commande au moins un des moyens d'interrupteur (SW101-SW105, etc.), pour l'actionner selon un ordre prédéfini, fournissant ainsi une tension de sortie sans étincelle de rupture et de faible ondulation.

3. Unité d'alimentation électrique selon la revendication. 1 ou 2, **caractérisée en ce que** la forme d'onde de la tension de sortie peut être linéaire, hachée ou à modulation d'impulsions en largeur.

4. Unité d'alimentation électrique selon l'une quelconque des revendications 1 à 3, comprenant en outre une unité d'entrée pour régler l'ordre opérationnel de l'unité de commande centrale selon un ensemble prédéterminé de tensions de sortie requises.

5. Unité d'alimentation électrique selon l'une quelconque des revendications 1 à 4, **caractérisée par** un dispositif de mesure (VT100) pour mesurer la tension de sortie sur les bornes de sortie et réaliser une rétroaction vers l'unité centrale de commande (CCU).

6. Unité d'alimentation électrique selon l'une quelconque des revendications 1 à 5, **caractérisée en ce que** chaque alimentation (U1-U6) de courant continu DC indépendante peut être la composition d'ensembles de batterie indépendantes ou peut être une alimentation de courant alternatif AC à sortie redressée pour fournir du courant continu DC.

7. Unité d'alimentation électrique selon l'une quelconque des revendications 1 à 5, **caractérisée en ce que** chaque alimentation (U1-U6) de courant continu DC est une source d'alimentation solaire.

8. Unité d'alimentation électrique selon l'une quelconque des revendications précédentes, **caractérisée en ce que** chaque moyen d'interrupteur (SW101-SW105, etc.) comporte deux interrupteurs en parallèle disposés chacun entre des alimentations (Ul-U6) successives.

9. Unité d'alimentation électrique selon Tune quelconque des revendications 1 à 7, **caractérisée en ce que** chaque moyen d'interrupteur (SW101-SW105, etc.) comporte un seul interrupteur disposé entre des alimentations (U1-U6) successives.

10. Unité d'alimentation électrique selon l'une quelconque des revendications 1 à 8, **caractérisée en ce que** chacun des moyens d'interrupteur (SW101-SW105, etc.) est constitué d'un interrupteur à semi-conducteur comportant des contacts interrupteurs électromécaniques sur son entrée et sa sortie.

11. Unité d'alimentation électrique selon l'une quelconque des revendications 1 à 8, **caractérisée en ce que** chacun des moyens d'interrupteur (SW101-SW105, etc.) est un interrupteur électromécanique ayant un premier et second contacts communs, un premier et second contacts normalement fermés, et un premier et second contacts normalement ouverts, le premier contact commun de chaque interrupteur électromécanique étant relié à un second contact normalement fermé de cet interrupteur, et le second contact étant relié au premier contact normalement fermé de cet interrupteur.

12. Unité d'alimentation électrique selon la revendication 11, **caractérisée en ce que** chacun des interrupteurs électromécaniques est relié entre une paire respective d'ensembles de batterie (U1-U6), l'agencement étant tel que la borne négative de chaque ensemble de batteries est reliée à la fois au premier contact commun et au second contact normalement fermé d'un interrupteur électromécanique associé, et la borne positive d'un ensemble de batteries est reliée au premier contact normalement fermé et au second contact commun de cet interrupteur ; par laquelle, lorsque chaque interrupteur électromécanique est actionné par l'unité centrale de commande (CCU), les contacts respectifs communs sont reliés aux contacts normalement ouverts respectifs ou aux contacts normalement fermés respectifs, réalisant ainsi une connexion en série ou en parallèle de chaque ensemble de batteries.

13. Unité d'alimentation électrique selon l'une quelconque des revendications précédentes, **caractérisée par** un dispositif de mesure de courant (CT100) relié en série avec l'interrupteur à semi-conducteur (SSS100), le dispositif de mesure de courant (CT100) fournissant des signaux de rétroaction à l'unité centrale de commande (CCU).

14. Unité d'alimentation électrique selon l'une quelconque des revendications 1 à 13, **caractérisée en ce que** l'interrupteur à semi-conducteur (SSS100) est un dispositif agencé pour modifier linéairement les caractéristiques d'impédance entre un état MARCHE dans lequel l'impédance est faible et un état ARRET dans lequel l'impédance est suffisamment élevée pour couper le courant.

15. Unité d'alimentation électrique selon l'une quelconque des revendications 1 à 13, **caractérisée en ce que** l'interrupteur à semi-conducteur (SSS100) est un interrupteur à onde hachée.

16. Unité d'alimentation électrique selon l'une quelconque des revendications 1 à 13, **caractérisée en ce que** l'interrupteur à semi-conducteur (SSS100) est un interrupteur à modulation d'impulsions en largeur.

17. Unité d'alimentation électrique selon l'une quelconque des revendications précédentes, **caractérisée en ce que** l'unité est un convertisseur continu DC/AC comprenant une pluralité d'unités d'interrupteur supplémentaires reliés ensemble afin de former un montage en pont pour l'inversion de polarité de la tension de sortie par l'unité d'alimentation électrique, le montage en pont étant disposé entre les alimentations (U1-U6) et les bornes de sortie positive et de terre, l'unité centrale de commande (CCU) commandant le montage en pont de manière à ce qu'une tension de sortie de fonction échelon alternative soit réalisée entre les bornes de sortie, et de façon que la tension de sortie de fonction échelon soit commandée de manière synchrone avec le montage en pont, maintenant ainsi une relation synchrone entre le point neutre de le tension de sortie de fonction échelon et l'inversion de polarité du montage en pont.

18. Unité d'alimentation électrique selon la revendication 17, **caractérisée en ce que** les alimentations (U1-U6) sont des premier, deuxième, troisième, quatrième, cinquième et sixième ensembles de batterie, une première unité d'interrupteur montée entre la borne négative du premier ensemble de batteries (U1) et la borne positive du deuxième ensemble de batteries (U2), une deuxième unité d'interrupteur (SSS100) montée entre la borne négative du deuxième ensemble de batteries (U2) et la borne positive du troisième ensemble de batteries (U3), une troisième unité d'interrupteur montée entre la borne négative du troisième ensemble de batteries (U3) et la borne positive du quatrième ensemble de batteries (U4), une quatrième unité d'interrupteur montée entre la borne négative du quatrième ensemble de batteries (U4) et la borne positive du cinquième ensemble de batteries (U5), et une cinquième unité d'interrupteur montée entre la borne négative du cinquième ensemble de batteries (U5) et la borne positive du sixième ensemble de batteries (U6), dans laquelle au moins une des six unités d'interrupteur peut être actionnée par l'unité centrale de commande pour relier les ensembles de batterie aux agencements en série et/ou en parallèle.

19. Unité d'alimentation électrique selon la revendication 18, **caractérisée en ce que** dans une première position de fonctionnement le premier, deuxième, troisième, quatrième, cinquième et sixième ensembles de batterie (U1-U6) sont en parallèle, et la tension de sortie est la tension de borne de chaque ensemble de batteries ; lorsque la première, troisième et cinquième unités d'interrupteur sont dans une seconde position de fonctionnement, le premier et deuxième ensembles de batterie (U1, U2), la troisième et quatrième ensembles de batterie (U3, U4), et le cinquième et sixième ensembles de batterie (U5, U6), respectivement, sont reliés en série, et **en ce que** le premier et deuxième ensembles de batterie (U1, U2) reliés en série sont en parallèle avec le troisième et quatrième ensembles de batterie (U3, U4) reliés en série, et sont en parallèle avec le cinquième et sixième ensembles de batterie (U5, U6) reliés en série, et la tension de sortie est le double de la tension de borne de chaque ensemble de batteries ; et, lorsque la totalité des cinq unités d'interrupteur sont dans la seconde position de fonctionnement, le premier, deuxième, troisième, quatrième, cinquième et sixième ensembles de batterie (U1-U6) sont reliés en série, et la tension de sortie est six fois la tension de borne de chacune des ensembles de batterie.

20. Unité d'alimentation électrique selon la revendication 17, **caractérisée en ce que** les unités d'alimentation électrique sont constituées par un premier, deuxième, troisième et quatrième ensembles de batterie (U1-U4), une première unité d'interrupteur (SW302) montée entre le premier et deuxième ensembles de batterie (U1, U2), une deuxième unité d'interrupteur (SSS100) montée entre le deuxième et troisième ensemble de batteries (U2, U3), et une troisième unité d'interrupteur (SW303) montée entre le troisième et quatrième ensembles de batterie (U3, U4), chacune des unités d'interrupteur ayant des premier et second contacts.

21. Unité d'alimentation électrique selon la revendication 20, **caractérisée en ce que** les diodes de shunt comprennent une première, deuxième, troisième, quatrième, cinquième et sixième diodes, la borne positive du premier ensemble de batteries (U1) étant reliée au premier contact de la première unité d'interrupteur (SW302) et à l'électrode d'anode de la première diode, la borne négative du premier ensemble de batteries (U1) étant reliée à l'électrode d'anode de la deuxième diode, à l'électrode d'anode de la quatrième diodé, et à la borne dé sortie de terre, la borne positive du deuxième ensemble de batteries (U2) étant reliée à l'électrode de cathode de la première diode, à l'électrode d'anode de la troisième diode, et au premier contact de la deuxième unité d'interrupteur (SSS100), la borne négative du deuxième ensemble de batteries (U2) étant reliée au second contact de la première unité d'interrupteur (SW302), et à l'électrode de cathode de la deuxième diode, la borne positive du troisième ensemble de batteries (U3) étant reliée à l'électrode d'anode de la cinquième diode et au premier contact de la troisième unité d'interrupteur (SW303), la borne négative du troisième ensemble de batteries (U3) étant reliée au second contact de la deuxième unité d'interrupteur (SSS100), à l'électrode d'anode de la sixième diode, et à l'électrode de cathode de la quatrième diode, la borne positive du quatrième ensemble de batteries (U4) étant reliée à l'électrode de cathode de la cinquième diode, à l'électrode de cathode de la troisième diode, et à la borne de sortie positive, la borne négative du quatrième ensemble de batteries (U4) étant reliée au second contact de la troisième unité d'interrupteur (SW303), et à l'électrode de cathode de la sixième diode ; dans laquelle, dans une première position de fonctionnement de la première, deuxième et troisième unités d'interrupteur (SW302, SW303, SSS100), le premier, deuxième, troisième et quatrième ensemble de batteries (U1-U4) sont en parallèle, et la tension entre les bornes de sortie est la tension de sortie de chaque ensemble de batteries ; dans laquelle, lorsque la première et la troisième unités d'interrupteur (SW302, SW303) sont dans une seconde position de fonctionnement, le premier et le deuxième ensemble de batteries (U1, U2) sont reliés en série, le troisième et le quatrième ensemble de batteries (U3, U4) sont reliés en série, le premier et le deuxième ensemble de batteries (U1, U2) reliés en série sont en parallèle avec le troisième et le quatrième ensemble de batteries (U3, U4) reliés en série, et la tension entre les bornes de sortie est le double de la tension de borne de chaque ensemble de batteries ; et dans laquelle, lorsque la première, deuxième et troisième unités d'interrupteur sont dans la seconde position de fonctionnement, le premier, deuxième, troisième et quatrième ensemble de batteries (U1-U4) sont tous en série, et la tension entre les bornes de sortie est quatre fois la tension de borne de chaque ensemble de batteries.
